# EUROPEAN PATENT APPLICATION

(11) **EP 4 597 686 A1**
(43) Date of publication of application: **06.08.2025**
(21) Application number: 23865901.5
(22) Date of filing: 15.09.2023
(51) Int. Cl.: H01M 10/54, F27D 5/00, F27B 21/04, F27B 14/08

(54) **SAGGAR FOR RECYCLING WASTE BATTERY**

(30) Priority: 16.09.2022 KR 20220117273; 14.09.2023 KR 20230122682
(71) Applicant: RD Solution Co., Ltd., Jeollabuk-do 55365 (KR)
(72) Inventor: YOON, Jeong Suk, Daejeon 35211 (KR); KIM, Jin Ho, Daejeon 35211 (KR); KIM, Jae Won, Daejeon 35211 (KR)
(74) Representative: Jung, Minkyu
(86) International application number: PCT/KR2023/013924
(87) International publication number: WO 2024/058605

(57) **Abstract**

The present invention provides a saggar for an apparatus for recycling of waste secondary batteries, the saggar including a storage part input together with objects into the apparatus including a work part, wherein the storage part includes a body part and a mesh part coming into contact with the objects inside the body part, and a predetermined mixed gas input into the work part enters the storage part. According to the present invention, heat treatment efficiency can be maximized by making it easy to input a gas for heat treatment of waste secondary batteries, mass heat treatment of waste secondary batteries is possible, and multiple types of waste secondary batteries can be treated at once.

## Description

### [Technical Field]

The present invention relates to a saggar for an apparatus for recycling of waste batteries. Specifically, the present invention relates to a saggar for an apparatus for recycling of waste batteries that is devised to be input to a waste battery recycling apparatus, to which a dry separation technique and a vertical heat treatment and kiln structure are reflected, to induce heat treatment to be easily performed on objects, maximize heat treatment efficiency, prevent the generation and scattering of harmful substances, and be able to be placed to its correct position and moved in a process of being input, moved, and discharged.

### [Background Art]

Generally, batteries using lithium-ion secondary batteries etc., are widely used in various industrial environments and daily life. Because batteries that are discarded after use have a significant impact on environmental pollution and sustainability needs to be recycled by recovering valuable core materials that make up the batteries from typically limited resources, research on recycling batteries is actively underway.

Accordingly, a dry smelting process capable of mass recycling waste secondary batteries has been developed and used in which valuable metals are recovered from waste secondary batteries by providing an appropriate reducing gas atmosphere around the waste secondary batteries and heating the waste secondary batteries. Here, development of means for containing the waste secondary batteries is also actively underway to increase the efficiency of the developed pyrometallurgical process.

A means for containing the waste secondary batteries and inputting the waste secondary batteries into a kiln (hereinafter referred to as "saggar") is made of a high temperature heat-resistant metal or material and is input into a kiln while having waste secondary batteries placed therein, and the material and shape of the saggar should allow the saggar to withstand a high-temperature and reactive environment in the kiln. In addition, the saggar should be made of a material that can increase efficiency of heat transfer to the placed waste secondary batteries, and preferably, the saggar may be manufactured to have a structure that can ensure stable movement in the kiln.

### [Disclosure]

### [Technical Problem]

Various embodiments of the present invention are intended to address the above problems and is directed to providing a saggar that can increase efficiency of heat treatment of waste batteries.

The present invention is also directed to increasing work convenience and minimizing worker intervention in a process of recycling waste batteries.

The present invention is also directed to easily providing an ambient mixed gas to batteries that is input for heat treatment of the waste batteries and fixing the positions of the waste batteries.

The present invention can also be utilized in heat-treating various types and shapes of waste secondary batteries at once and in large quantities.

Objectives of the present invention are not limited to those mentioned above, and other unmentioned objectives should be clearly understood by those of ordinary skill in the art based on the description below.

### [Technical Solution]

To this end, the present invention provides a saggar for an apparatus for recycling of waste batteries, the saggar including a storage part input together with objects into the apparatus including a work part, wherein the storage part includes a body part and a mesh part coming into contact with the objects inside the body part, and a predetermined mixed gas input into the work part enters the storage part.

**In** addition, the storage part may further include one or more first coupling parts formed on the body part, the first coupling parts may have circular arrangement about a central axis of the body part, the storage part may further include first through-holes formed to pass through the body part, the predetermined mixed gas may pass through the first through-holes, and the storage part may further include a lower end guide groove formed in the body part and engaged with a first guide groove or a second guide groove disposed in the apparatus.

In addition, the storage part may include at least one or more of an upper end engaging part formed on an upper side of the mesh part and a lower end engaging part formed on a lower side of the mesh part, and when two or more body parts are disposed in a vertical direction, the upper end engaging part may come into contact with the mesh part or the lower end engaging part in the vertical direction.

In addition, the storage part may include a first contact part formed on the upper end engaging part and a second contact part formed on the lower end engaging part, and when two or more body parts are disposed in a vertical direction, the upper end engaging part and the lower end engaging part may be engaged with each other as the first contact part is inserted into the second contact part.

In addition, the storage part may include at least one or more of first through-holes formed to pass through the body part, a lower end guide groove formed in the body part, an upper end engaging part formed on an upper side of the mesh part, a lower end engaging part formed on a lower side of the mesh part, a first contact part formed on the upper end engaging part, and a second contact part formed on the lower end engaging part.

In addition, the storage part may further include a plurality of second through-holes formed to pass through the mesh part, and the predetermined mixed gas may pass through the second through-holes.

In addition, a position of the storage part may be fixed as a fixing part, which is withdrawn from inside the work part into which the storage part is input, is inserted between a plurality of first coupling parts.

In addition, the storage part may further include a division part formed on the mesh part and partitioning a section where the second through-holes are formed into two or more portions.

### [Advantageous Effects]

According to an embodiment of the present invention, since it is possible to place waste secondary batteries at correct positions and move the waste secondary batteries in a process of inputting the waste secondary batteries to heat in controlled manner the waste secondary batteries, excessive deterioration of the waste secondary batteries or unintentional generation of harmful substances can be prevented.

In addition, through the present invention, convenience and safety can be significantly improved by minimizing worker intervention in a moderately high-temperature, high-load environment.

In addition, through the present invention, heat treatment efficiency can be maximized by making it easy to input a mixed gas for heat exchange and reaction with the waste secondary batteries.

Further, through the present invention, bulk processing of waste secondary batteries is possible.

Advantageous effects of the present invention are not limited to those mentioned above, and other unmentioned advantageous effects should be clearly understood by those of ordinary skill in the art based on the description below.

### [Description of Drawings]

FIG. 1 is a view illustrating a storage part according to an embodiment of the present invention.
FIG. 2 is a view illustrating an embodiment of a mesh part according to the present invention.
FIG. 3 is a view illustrating a storage part according to another embodiment of the present invention.
FIG. 4 is a view illustrating a storage part according to still another embodiment of the present invention.
FIG. 5 is a view illustrating a storage part according to yet another embodiment of the present invention.
FIG. 6 is a view illustrating a storage part being fixed by a fixing part according to the present invention.
FIG. 7 is a view illustrating another embodiment of a storage part being fixed by a fixing part according to the present invention.
FIG. 8 is an overall view of a storage part according to an additional embodiment of the present invention.
FIG. 9 is a cutout perspective view of the storage part according to the additional embodiment of the present invention.
FIG. 10 is a cross-sectional view illustrating arrangement of a pair of storage parts in a vertical direction according to the additional embodiment of the present invention.
FIG. 11 is a view illustrating a storage part moving to its correct position due to a first guide part according to an embodiment of the present invention.

### [Best Mode of the Invention]

Terms used herein are for describing embodiments and are not intended to limit the present invention. In the specification, a singular expression includes a plural expression unless the context clearly indicates otherwise. The terms "comprises" and/or "comprising" used herein do not preclude the presence or addition of one or more components other than those mentioned. Throughout the specification, the same reference numerals refer to the same components, and the term "and/or" includes any and all combinations of one or more of mentioned components. Although the terms "first," "second," etc., are used herein to describe various components, of course, the components are not limited by the terms. The terms are only used to distinguish one component from another component. Therefore, of course, a first component mentioned below could be termed a second component within the technical spirit of the present invention.

Unless defined otherwise, all terms including technical and scientific terms used herein may be used with meanings that may be commonly understood by those of ordinary skill in the art to which the present invention pertains. Also, terms defined in commonly used dictionaries should not be interpreted in an idealized or overly formal sense unless expressly so defined herein.

Spatially relative terms, such as "below," "beneath," "lower," "above," and "upper," may be used herein for ease of description to describe one component's relationship to other components as illustrated in the figures. The spatially relative terms should be understood as terms encompassing different orientations of components in use or operation in addition to the orientation depicted in the figures. For example, if the component illustrated in the figures is turned over, a component described as "below" or "beneath" another component would then be oriented "above" the other component. Thus, the illustrative term "below" can encompass an orientation of both above and below. The components may also be oriented in different directions, and accordingly, the spatially relative terms may be interpreted according to orientations.

Prior to detailed description of the present invention, "objects" are waste secondary batteries and may be input while in an intact state or a partially ground state. In addition, "worker" is a person who performs a task of recycling waste secondary batteries using a saggar for an apparatus for recycling of waste secondary batteries according to the present invention, but the present invention is not limited thereto, and "worker" may refer to a person close to the saggar for an apparatus for recycling of waste secondary batteries according to the present invention.

Various embodiments may be configured according to the presence/absence of each component formed in a storage part 20 according to the present invention, and different embodiments may be freely combined.

A work part into which the storage part according to the present invention is inserted is a component providing a space for, in a state in which the storage part containing waste secondary batteries provided as objects is placed therein, heating the objects. To this end, the work part is formed in a cylindrical shape open in the vertical direction and induces the objects and the storage part 20 to be heated at once in a state in which a heating part, a fireproof part, and a temperature measurement part 124 are disposed in the work part. In addition, the work part consists of a first work part, a second work part, and a third work part and provides a space for, in a state in which the first work part, the second work part, and the third work part are arranged in the vertical direction, heat-treating the objects by receiving a predetermined mixed gas input from a discharge part.

The first work part provides a space for performing preheating of the storage part 20. To this end, a first internal temperature is created in the first work part, the second work part is disposed downward from the first work part, and the first work part and the second work part are connected to each other. Since the second work part is located at a lower side of the first work part and has a second internal temperature, the second work part performs a process of secondarily heating the storage part 20. The second work part is connected to each of the first work part and the third work part. The third work part is disposed at a lower side of the second work part, and a process of tertiarily heating the storage part 20 is performed at a third internal temperature.

In another embodiment of the present invention, when preheating the objects and the storage part 20 is performed in the first work part and actual firing of the objects and the storage part 20 is performed in the second work part, it is preferable for the second internal temperature to be higher than the first internal temperature and the third internal temperature. The relative differences among the first internal temperature, the second internal temperature, and the third internal temperature may change when the purpose of heat treatment of the objects that is performed in the first work part, the second work part, and the third work part changes.

The heating part is a means installed in the work part to heat the objects and the storage part 20, and more specifically, is a component for heating the objects. To this end, the heating part may be made of a silicon carbide (SiC) resistance heater capable of generating heat at high temperatures, but is not limited thereto. The heating part consists of a first heating part, a second heating part, and a third heating part that are disposed in the first work part, the second work part, and the third work part, respectively. Here, the first heating part, the second heating part, and the third heating part may operate independently or together by a controller, which will be described below, and may heat the objects and the storage part 20 at the first internal temperature, the second internal temperature, and the third internal temperature.

In still another embodiment of the present invention, at least one or more components among the first heating part, the second heating part, and the third heating part may be configured as a plurality of heating parts disposed in circular arrangement about a central axis of the work part in the vertical direction. Accordingly, it is possible to save usage of the heating parts and create the first internal temperature, the second internal temperature, and the third internal temperature in a uniform manner.

The fireproof part is a component for preventing deterioration of the heating part due to the objects heated inside the work part and preventing sharp changes in the internal temperatures. To this end, the fireproof part is disposed to surround the heating part or disposed close thereto. The fireproof part is provided for the first heating part, the second heating part, and the third heating part and consists of a first fireproof part, a second fireproof part, and a third fireproof part that are disposed at different positions.

The first fireproof part is a component protecting the plurality of heating parts while disposed inward therefrom. Specifically, the first fireproof part is located inward to face the central axis of the first work part, the second work part, and the third work part for the first heating part, the second heating part, and the third heating part. That is, by being disposed to correspond to portions that are inward from the first heating part, the second heating part, and the third heating part, the first fireproof part can prevent deterioration of the heating part due to foreign matter in the process of heating the objects.

The second fireproof part performs the same role as the first fireproof part described above but is disposed to surround the first heating part, the second heating part, and the third heating part. For example, in a case in which each of the first heating part, the second heating part, and the third heating part has a circular arc-shaped cross-section, the second fireproof part has a cross-sectional shape surrounding and accommodating the circular arc-shaped cross-section. Accordingly, the second fireproof part can prevent deterioration due to radiant heat in addition to preventing deterioration due to foreign matter entering in all directions.

The third fireproof part performs the same role as the first fireproof part and the second fireproof part described above but is disposed outward from the first heating part, the second heating part, and the third heating part. Accordingly, a horizontal cross-sectional arrangement structure is formed in which the first fireproof part, the heating part, the second fireproof part, and the third fireproof part are sequentially disposed in order of proximity to the central axis of the work part.

The discharge part is a component for withdrawing the objects from the work part and is located downward from the work part. Accordingly, an input part, the work part, and the discharge part have a vertical heating structure while connected to each other, and as compared to a conventional horizontal heating structure, the vertical heating structure has an effect of facilitating movement of objects and a gas necessary for heating the objects.

In addition, a mixed gas for heating the objects is initially input to the discharge part, and the mixed gas (predetermined mixed gas) exchanges heat and reacts with the objects by moving upward and then is discharged by moving to the input part.

The discharge part includes a vertical movement part for withdrawing the objects, a gas supply part inputting a predetermined mixed gas, a second opening/closing part partitioning an inner space, a second gas discharge part ventilating the space partitioned by the second opening/closing part, and a cooling part cooling the objects.

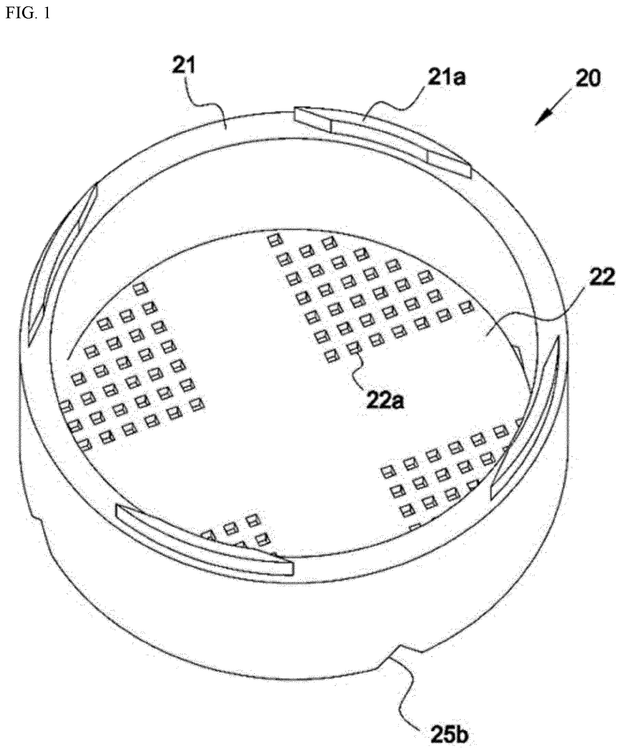

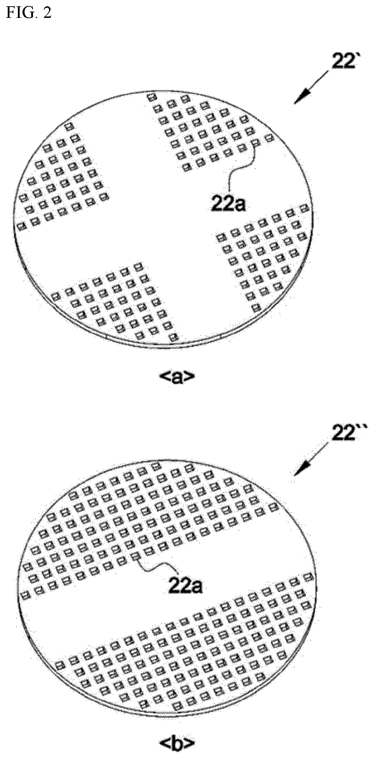

FIG. 1 is a view illustrating the storage part 20 according to one embodiment of the present invention, and FIG. 2 is a view illustrating an embodiment of a mesh part 22 according to the present invention.

The storage part 20 is a component that induces processing, such as heating, to be more easily performed in a state in which objects are stored in the storage part 20, and to this end, the storage part 20 is configured in a form with an open upper surface. More specifically, the storage part 20 has an exterior in the form of a circular frame and has a space in which objects may be placed.

Since the storage part 20 has a circular rim shape, as compared to a conventional rectangular saggar having a polygonal rim shape such as a quadrangular rim shape, it is possible to address a problem in which heat is not uniformly applied to a vertex portion where two surface portions come into contact.

The body part 21 is a component for collecting objects and is formed in the shape of a circular frame. Accordingly, the mesh part or perforated part 22 and an inner space in which objects may be placed are created, and objects input from above are heated together with the body part 21 in a state in which lower surfaces of the objects are loaded inside the body part 21. In addition, a plurality of first through-holes 21c are formed in the body part 21, and the plurality of first through-holes 21c are configured to have circular arrangement about a central axis of the body part 21.

A first coupling part 21a and a second coupling part 21b are formed on an upper side and a lower side, respectively, of the body part 21 and are provided for engagement with another body part 21 located above or below. To this end, the first coupling part 21a is formed in an embossed manner by protruding from an upper surface of the body part 21, and the second coupling part 21b is formed in an engraved manner in a lower surface of the body part 21 and corresponds to the size and form of the first coupling part 21a.

In yet another embodiment of the present invention, the first coupling part 21a may have an aggregate structure in which wedges having a peak facing upward are arranged along the circumference of the body part 21. That is, by being provided in the form of a sawtooth, the first coupling part 21a can maximize a binding strength between a pair of body parts 21 disposed in the vertical direction.

The mesh part 22 is provided for the purpose of having higher heating efficiency in the process of heating the objects. To this end, the mesh part 22 is located inward from the body part 21 and is configured in the form of mesh that is formed to be open in a lattice form. The mesh part 22 induces heat treatment of the objects as a predetermined mixed gas, which is input into the work part, enters the mesh part 22 in a state in which the mesh part 22 is in contact with the objects. In addition, the mesh part 22 is configured in the form of a plate and may have a plurality of through-holes (second through-holes 22a) formed therein. In this way, there are effects of increasing the stability of arrangement of the objects and increasing an inflow rate of the predetermined mixed gas.

Referring to FIG. 2, various embodiments may be implemented according to the number and arrangement of the plurality of through-holes formed in the mesh part 22. Specifically, as in FIG. 2A, a mesh part 22' may be provided to increase an amount of introduced predetermined mixed gas input from the outside and to classify and diversify the types of objects to be heated. In addition, as in FIG. 2B, a mesh part 22" may be provided to further limit the types of objects being heated at once and to increase the number of heated objects.

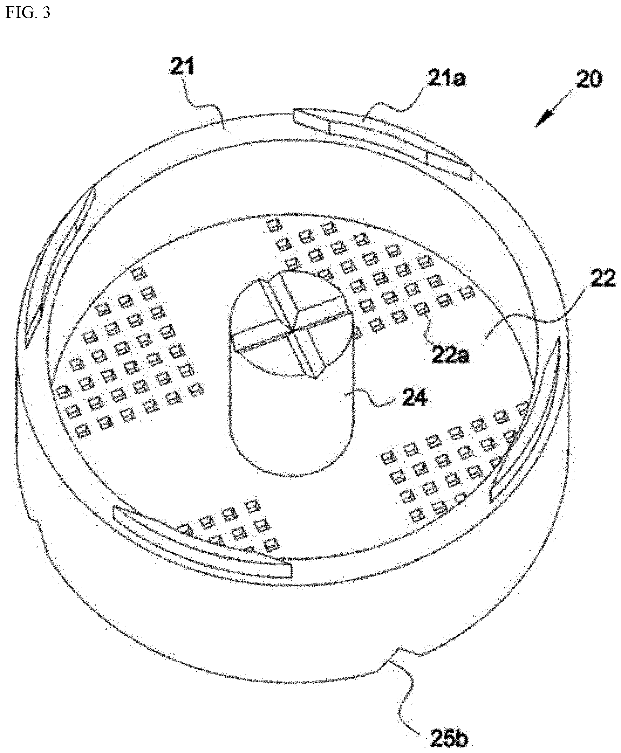

FIG. 3 is a view illustrating a storage part 20 according to another embodiment of the present invention.

As compared to the storage part according to one embodiment of the present invention, the storage part according to another embodiment of the present invention further includes an upper end engaging part 24 and a lower end engaging part 25 in order to be firmly supported while in contact with another storage part located in the vertical direction, and the above-mentioned first through-holes 21c or second through-holes 22a may be included or omitted.

The upper end engaging part 24 and the lower end engaging part 25 are components that induce fastening and support between a plurality of storage parts 20 by coming into contact with each other. To this end, the upper end engaging part 24 and the lower end engaging part 25 are formed upward and downward, respectively, from the mesh part 22. Here, an upper end of the upper end engaging part 24 and a lower end of the lower end engaging part 25 are each formed in the shape of a wedge to be able to come into contact with each other. Accordingly, in a pair of storage parts 20 disposed in the vertical direction, the lower end engaging part 25 formed on the storage part 20 disposed above and the upper end engaging part 24 formed on the storage part 20 disposed below come into surface contact with each other.

A height of an end of the upper end engaging part 24 that faces upward may be provided to be lower than or equal to a height of an end of the first coupling part 21a described above. Accordingly, there is an effect of doubly increasing a support force for the pair of storage parts 20, which are disposed in the vertical direction and of which the first coupling part 21a and the second coupling part 21b are engaged, by contact between the upper end engaging part 24 and the lower end engaging part 25. **In** addition, when a fixing part 160 is inserted between a plurality of first coupling parts 21a, since a predetermined mixed gas is easily input between the body part 21 and the fixing part 160, it is possible to derive an effect of maximizing thermal efficiency.

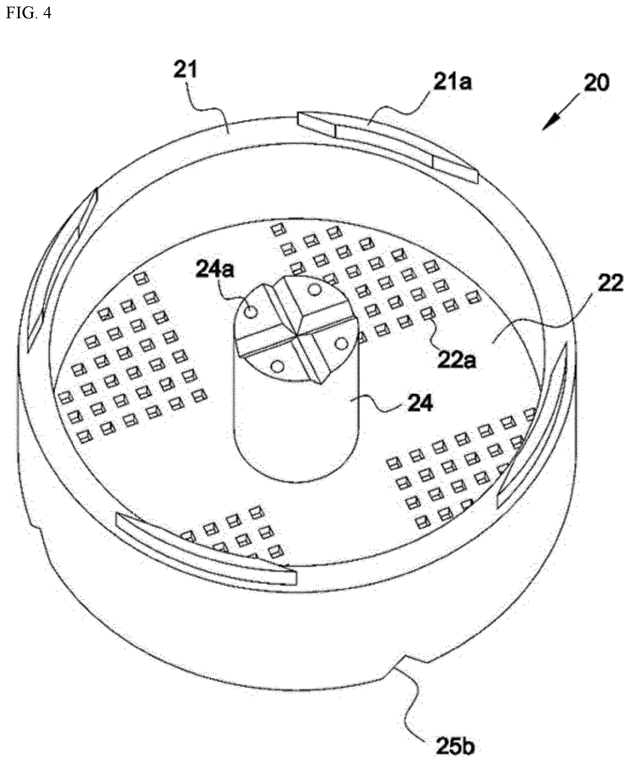

FIG. 4 is a view illustrating a storage part 20 according to still another embodiment of the present invention.

As compared to the storage part 20 according to FIG. 3, the storage part 20 according to FIG. 4 may further include a first contact part 24a and a second contact part 25a.

Support performance between storage parts 20 can be maximized through the first contact part 24a and the second contact part 25a. The first contact part 24a and the second contact part 25a are formed on the upper end engaging part 24 and the lower end engaging part 25, respectively.

The first contact part 24a has a structure formed to protrude upward from the upper end engaging part 24 and is formed in various shapes such as a hemispherical shape and a polyhedral shape, and the second contact part 25a is formed in an engraved manner in the lower end engaging part 25 to correspond to the size and shape of the first contact part 24a. Accordingly, when a pair of storage parts 20 are disposed in the vertical direction so that the upper end engaging part 24 and the lower end engaging part 25 thereof come into contact with each other, the first contact part 24a is inserted into the second contact part 25a. Therefore, a more firmly fixed state can be maintained based on the surface contact between the upper end engaging part 24 and the lower end engaging part 25 and the insertion structure between the first contact part 24a and the second contact part 25a described above. Further, since the pair of storage parts 20 are disposed so that the first contact part 24a is inserted into the second contact part 25a, there is an effect of making it easy to arrange the storage parts 20 into correct positions.

A lower end guide groove 25b that may identically apply to all embodiments according to the present invention is a component devised to enable movement of the storage part 20 in the horizontal direction in a state in which the storage part 20 is disposed at its correct position, and the lower end guide groove 25b is located downward from the storage part 20. In addition, the lower end guide groove 25b is formed to correspond to the size and shape of a first guide part 111b and a second guide part 112b-1, which are formed in the input part for inputting the storage part into the work part and provide movement paths, and is formed to pass through the body part 21.

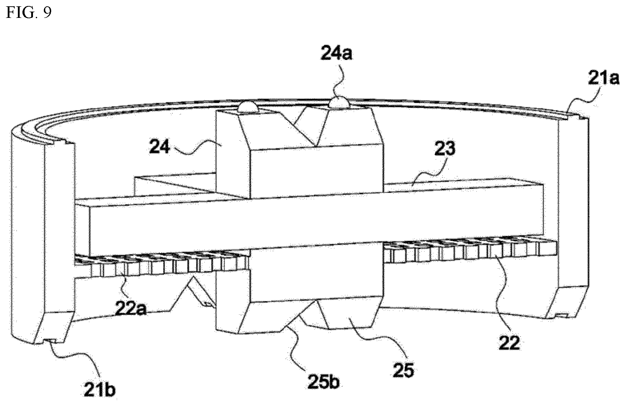

In yet another embodiment of the present invention, two or more lower end guide grooves 25b may be formed in an engraved manner in the body part 21 in a plurality of directions. For example, as in FIG. 9, lower end guide grooves 25b may be formed in four different directions. The storage part 20 including the lower end guide grooves 25b may be guided to rotate corresponding to the position and direction of the first guide part 111b or the second guide part 112b-1 and moved.

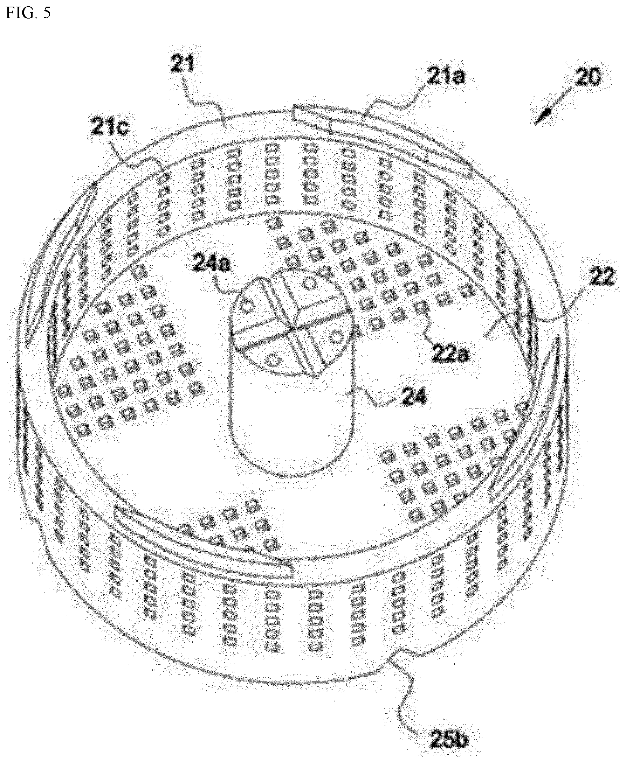

FIG. 5 is a view illustrating a storage part 20 according to yet another embodiment of the present invention, and as compared to the embodiment according to FIG. 4, the storage part 20 may further include first through-holes 21c, and the first through-holes 21c may apply to all embodiments.

The first through-holes 21c are components inducing gas, which induces heat treatment to be performed on the storage part 20 input into the work part, to be easily input into the body part 21. To this end, the plurality of first through-holes 21c are formed to pass through an outer circumferential surface and an inner circumferential surface of the body part 21. In addition, the first through-holes 21c are arranged to have circular arrangement about the central axis of the body part 21. Accordingly, through the first through-holes 21c and the second through-holes 22a formed in the body part 21 and the mesh part 22, respectively, a circulation structure in which a predetermined mixed gas disposed outside is more easily input to and discharged from the storage part 20 can be created. Therefore, there is an effect of significantly increasing heat treatment efficiency for the objects located inside the storage part 20.

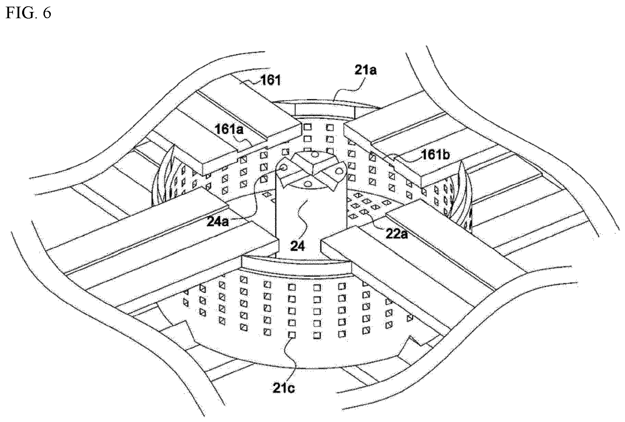

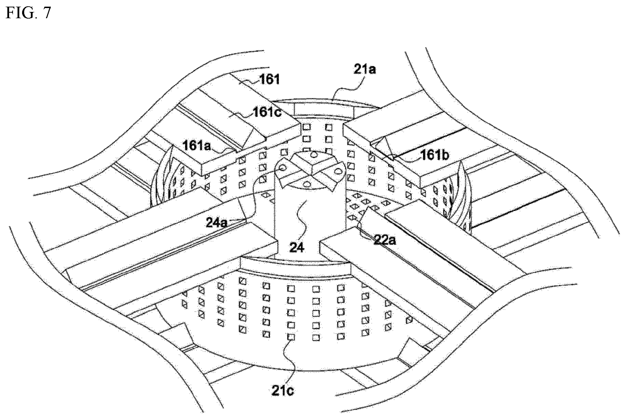

FIG. 6 is a view illustrating the storage part 20 being fixed by the fixing part 160 according to the present invention, and FIG. 7 is a view illustrating another embodiment of the storage part 20 being fixed by the fixing part 160 according to the present invention.

The fixing part 160 may be further provided downward from the work part for heating the storage part 20. The fixing part 160 prevents an unintentional change in the vertical position of the storage part 20 that contains objects and is heated together with the objects. To this end, the fixing part 160 is configured in the form of a plate that is located downward from the storage part 20 and has an upper surface coming into contact with a lower surface of the storage part 20 inside the work part. In addition, for more firmly fixing the height of the storage part 20, the fixing part 160 may be provided as a plurality of fixing parts 160, and the plurality of fixing parts 160 may be disposed in circular arrangement about the central axis of the work part.

By being further provided and disposed upward from the storage part 20, the fixing part 160 may induce the height of another storage part 20 located upward therefrom to be fixed. In order to further facilitate an input of a predetermined mixed gas and create an air circulation structure inside the storage part 20, an insertion plate part 161 is further included, and the insertion plate part 161 includes a first inlet hole 161a, a second inlet hole 161b, and an auxiliary fixing part 161c.

The insertion plate part 161 is a component located upward and downward from the storage part 20 to fix the height of the storage part 20. To this end, the insertion plate part 161 is installed inside the work part and has a structure that is withdrawable to be close to the central axis of the work part. In addition, the insertion plate part 161 comes into contact with a lower surface of the storage part 20 or is inserted between the plurality of first coupling parts 21a formed on the storage part 20. In this way, the position of the storage part 20 is fixed in the vertical direction.

The first inlet hole 161a and the second inlet hole 161b induce a predetermined mixed gas, which is input into the work part, to be easily input into the storage part 20. To this end, the first inlet hole 161a and the second inlet hole 161b are formed in an upper surface and a lower surface, respectively, of the insertion plate part 161 and are formed in the longitudinal direction of the insertion plate part 161. Accordingly, the insertion plate part 161 has a cross-sectional structure having a step partially formed in the vertical direction.

The predetermined mixed gas moved from the discharge part to the work part moves along the first inlet hole 161a and the second inlet hole 161b, which are formed in the insertion plate part 161, in a process of moving toward the storage part 20 and is naturally input into the storage part 20. Accordingly, even while minimizing worker intervention, the input of the gas into the storage part 20 can be automatically induced, and simultaneously, movement of the storage part 20 can be suppressed, and the objects located inside the storage part 20 can be prevented from scattering unintentionally.

The auxiliary fixing part 161c is a component strengthening a fixing strength between the insertion plate part 161 and the storage part 20 and is configured as a bar-shaped member having the same cross-sectional area and shape as the first guide part 111b and the second guide part 112b-1 located on the input part. When the insertion plate part 161 on which the auxiliary fixing part 161c is formed is disposed in the vertical direction of the storage part 20, the auxiliary fixing part 161c may be inserted into the lower end guide groove 25b formed in the storage part 20 and may induce the storage part 20 to be arranged into its correct position.

The auxiliary fixing part 161c is formed in the first inlet hole 161a, and a width of a base side of the auxiliary fixing part 161c is configured to be smaller than a width of the first inlet hole 161a. Accordingly, since the first inlet hole 161a is not completely blocked by the auxiliary fixing part 161c, a function of inputting a gas into the storage part 20 can be maintained.

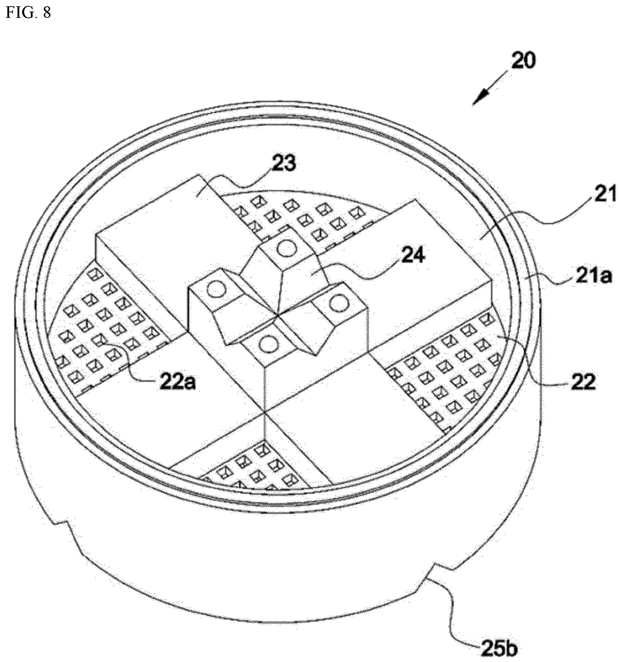

FIGS. 8 to 10 relate to a storage part 20 according to an additional embodiment of the present invention, and the above-described body part 21, mesh part 22, first coupling part 21a, second coupling part 21b, upper end engaging part 24, and lower end engaging part 25 may apply identically to the additional embodiment.

The mesh part 22 may be connected to an inner surface of the body part 21 and may be disposed at a position that is upward and spaced from a lower surface of the body part 21. Meanwhile, although the drawings show that a single mesh part 22 is provided, two or more mesh parts 22 may be arranged in the vertical direction and may induce higher heat treatment efficiency for objects.

A division part 23 is located inside the body part 21, imparts a position at which the mesh part 22 is fixed, and allows the body part 21 to be supported in the vertical direction. At the same time, the division part 23 partitions an inner space of the body part 21. To this end, the division part 23 is configured as a bar- or stick-shaped member and has a structure in which an end comes into contact with the inner surface of the body part 21. In yet another embodiment of the present invention, the division part 23 is formed in a "+" shape and has four ends coming into contact with the body part 21, thereby allowing firmer support and allowing different types of objects to be input and heated separately from each other.

The inner space of the body part 21 may be partitioned by the division part 23. At the same time, the mesh part 22 disposed inside the body part 21 may be integrally configured with the body part 21 and may cause the space to be separated into two or more portions. Accordingly, a section of the mesh part 22 where the second through-holes 22a are formed is partitioned into two or more portions. In this way, there is an effect of allowing objects having different compositions or forms to be heated independently. Meanwhile, the upper end engaging part 24 and the lower end engaging part 25, which have been described above, are formed upward and downward, respectively, from the division part 23.

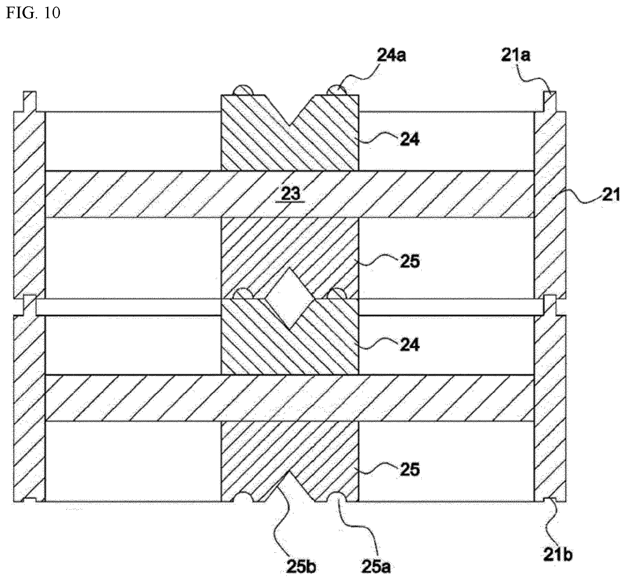

FIG. 10 is a cross-sectional view illustrating arrangement of a pair of storage parts 20 in a vertical direction according to the additional embodiment of the present invention, and configurations of the first through-holes 21c and the second through-holes 22a are omitted to show fastening and support between the storage parts 20 arranged in the vertical direction.

When two or more storage parts 20 are input to the work part through the input part, the storage parts 20 are arranged in the vertical direction and heated. In this process, the second coupling part 21b, the lower end engaging part 25, and the second contact part 25a included in the storage part 20 located above are engaged to the first coupling part 21a, the upper end engaging part 24, and the first contact part 24a included in the storage part 20 located below by coming into contact therewith or being inserted thereinto.

The plurality of storage parts 20 having the above-described multi-contact and engagement structure can be supported more firmly in the vertical direction and can easily be arranged into correct positions, thereby minimizing worker intervention.

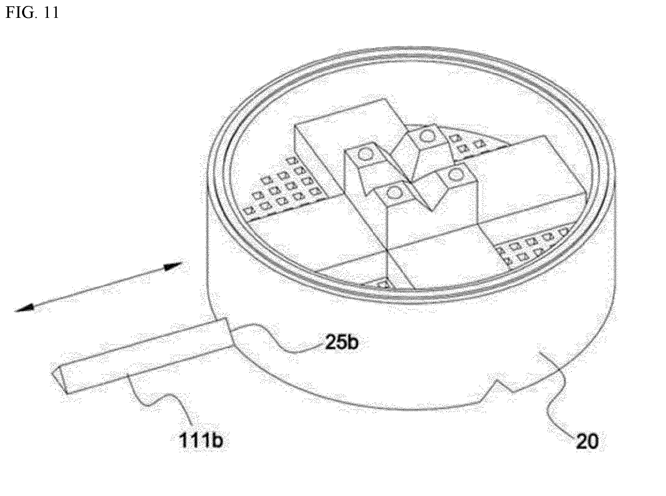

FIG. 11 is a view illustrating the storage part 20 moving to its correct position due to the first guide part 111b according to an embodiment of the present invention.

The first guide part 111b formed on the input part to move the storage part 20 to the work part provides a path for more accurate movement guide. To this end, the first guide part 111b is formed inside the input part.

In addition, the first guide part 111b is formed to be insertable into the lower end guide groove 25b formed in the body part 21 described above. Specifically, a cross-sectional shape of the first guide part 111b is formed to be the same as a cross-sectional shape of the lower end guide groove 25b. In this way, when the first guide part 111b comes into contact with the lower end guide groove 25b, the movement of the storage part 20 can be guided in the longitudinal direction of the first guide part 111b inside the input part.

In yet another embodiment of the present invention, the first guide part 111b may be configured in the form of a wedge having a triangular cross-section. In this way, it is possible to more easily guide movement of the storage part 20, and the storage part 20 can be prevented from being detached from the first guide part 111b in the guide process. Meanwhile, the second guide part 112b-1 having the same form as the first guide part 111b may be disposed upward from a movable partition part 112b located inside a standby section part 112.

In yet another embodiment of the present invention, the storage part 20 may automatically be input from inside the input part to the work part for heat treatment through a stopper 112a and the movable partition part 112b.

The stopper 112a limits further movement of the storage part 20 that is guided to move to the work part by the first guide part 111b. To this end, the stopper 112a is provided in the form of a plate connected to a separate stretchable means having elasticity. As the storage part 20, whose movement is guided, comes into contact with the stopper 112a inside the standby section part 112, unintentional further movement of the storage part 20 can be prevented. To this end, preferably, a front surface of the stopper 112a may be disposed to correspond to a direction directly above from the work part.

In yet another embodiment of the present invention, a damage preventing part may be further provided on the front surface of the stopper 112a that comes into contact with the storage part 20. The damage preventing part is a component that has a restoration force and absorbs impact generated from the storage part 20. In this way, the stopper 112a or the storage part 20 can be prevented from being damaged in a collision process.

The movable partition part 112b is provided to, through opening/closing, control connection between inner spaces of the input part and the work part. To this end, the movable partition part 112b is provided in a form corresponding to an open upper surface of the work part and reciprocates along a separate rail part formed on a lower surface inside the standby section part 112. In addition, the movable partition part 112b has a structure that is spaced from the stopper 112a in the vertical direction to not come into contact with the stopper 112a in a process in which the movable partition part 112b slides.

When the movable partition part 112b is located right above the work part and the standby section part 112 and the work part are disconnected from each other, the storage part 20 is not input into the work part, and a firing process for the storage part 20 is not performed.

On the other hand, when the movable partition part 112b located right above the work part slides, the inner spaces of the standby section part 112 and the work part are connected to each other. Accordingly, surface contact between the storage part 20, which is pressed and moved from an insertion section part 111 toward the standby section part 112, and the second guide part may be released due to gravity, the storage part 20 and the second guide part may be separated from each other, and the storage part 20 may move downward from right above the work part and may be input into the work part.

The second guide part 112b-1 is a component providing a path for the storage part 20, whose input to the work part is limited by the movable partition part 112b, to maintain its correct position, is provided in the same form as the first guide part 111b described above, and is formed on an upper surface of the movable partition part 112b. Here, preferably, longitudinal directions of the first guide part 111b and the second guide part 112b-1 may be provided to be the same as each other.

In a state in which the movable partition part 112b is located right above the work part, further movement of the storage part 20 is limited by the stopper 112a, and the storage part 20 is located right above the work part in a state in which the second guide part 112b-1 prevents distortion of an angle of the storage part 20. Then, when the movable partition part 112b slides and deviates from right above the work part, the storage part 20 moves downward due to gravity and is input into the work part. In this way, even in a state in which worker intervention is minimized, arrangement and input of the storage part 20 toward the work part are possible.

Although embodiments of the present invention have been described above with reference to the accompanying drawings, those of ordinary skill in the art to which the present invention pertains should understand that the present invention can be embodied in other specific forms without changing the technical spirit or essential features thereof. Therefore, the embodiments described above should be understood as illustrative, instead of limiting, in all aspects.

### [Modes of the Invention]

The modes of the invention have been described above in the best mode of the invention.

### [Industrial Applicability]

The present invention can provide a saggar for an apparatus for recycling of waste secondary batteries.

## Claims

1. A saggar for an apparatus for recycling of waste secondary batteries, the saggar comprising:
a storage part input together with objects into the apparatus including a work part,
wherein the storage part includes a body part and a mesh part coming into contact with the objects inside the body part, and
a predetermined mixed gas input into the work part enters the storage part.

2. The saggar of claim 1, wherein:
the storage part further includes one or more first coupling parts formed on the body part; and
the first coupling parts have circular arrangement about a central axis of the body part.

3. The saggar of claim 2, wherein:
the storage part further includes first through-holes formed to pass through the body part; and
the predetermined mixed gas passes through the first through-holes.

4. The saggar of claim 2, wherein the storage part further includes a lower end guide groove formed in the body part and engaged with a first guide groove or a second guide groove disposed in the apparatus.

5. The saggar of claim 2, wherein the storage part includes at least one or more of:
an upper end engaging part formed on an upper side of the mesh part; and
a lower end engaging part formed on a lower side of the mesh part, and
when two or more body parts are disposed in a vertical direction, the upper end engaging part comes into contact with the mesh part or the lower end engaging part in the vertical direction.

6. The saggar of claim 2, wherein the storage part includes:
a first contact part formed on the upper end engaging part; and
a second contact part formed on the lower end engaging part, and
when two or more body parts are disposed in a vertical direction, the upper end engaging part and the lower end engaging part are engaged with each other as the first contact part is inserted into the second contact part.

7. The saggar of claim 2, wherein the storage part includes at least one or more of:
first through-holes formed to pass through the body part;
a lower end guide groove formed in the body part;
an upper end engaging part formed on an upper side of the mesh part;
a lower end engaging part formed on a lower side of the mesh part;
a first contact part formed on the upper end engaging part; and
a second contact part formed on the lower end engaging part.

8. The saggar of any one of claims 1 to 7, wherein:
the storage part further includes a plurality of second through-holes formed to pass through the mesh part; and
the predetermined mixed gas passes through the second through-holes.

9. The saggar of claim 8, wherein a position of the storage part is fixed as a fixing part, which is withdrawn from inside the work part, is inserted between a plurality of first coupling parts.

10. The saggar of claim 8, wherein the storage part further includes a division part formed on the mesh part and partitioning a section where the second through-holes are formed into two or more portions.
